# EUROPÄISCHE PATENTANMELDUNG

(11) **EP 4 660 491 A1**
(43) Veröffentlichungstag der Anmeldung: **10.12.2025**
(21) Anmeldenummer: 25177625.8
(22) Anmeldetag: 20.05.2025
(51) Int. Cl.: F16K 7/12, F16K 37/00, F16K 49/00, F16K 27/02

(54) **VENTILKÖRPER FÜR EIN PROZESSVENTIL UND PROZESSVENTIL**

(30) Priorität: 06.06.2024 DE 102024115894
(71) Anmelder: GEMÜ Gebr. Müller Apparatebau GmbH & Co. Kommanditgesellschaft, 74653 Ingelfingen (DE)
(72) Erfinder: Magej, Johann, 74523 Schwäbisch Hall (DE); Zuck, Elena, 74206 Bad Wimpfen (DE); Mager, Marcus, 74906 Bad Rappenau (DE)
(74) Vertreter: DREISS Patentanwälte PartG mbB

(57) **Zusammenfassung**

Es wird ein Ventilkörper (100) für ein Prozessventil vorgeschlagen, wobei eine Öffnung (102) des Ventilkörpers (100) zu einem feststehenden Ventilsitz (104) führt, wobei ausgehend von dem feststehenden Ventilsitz (104) des Ventilkörpers (100) wenigstens zwei Fluidkanalabschnitte (110a-b) in den Ventilkörper (100) hinein führen, wobei wenigstens eine Wandung (112a) einen der Fluidkanalabschnitte (110a) und wenigstens eine Trockenseite (106) des Ventilkörpers (100) voneinander trennt, und wobei wenigstens eine Oberfläche (114a) auf der Trockenseite (106) der wenigstens einen Wandung (112a) mit wenigstens einem thermoelektrischen Modul (140a) thermisch leitend verbunden ist.

## Beschreibung

Die Erfindung betrifft Fortschritte im Bereich der Prozessventiltechnik.

Ein Prozessventil ist ein essenzielles Steuer- und/oder Regelelement in industriellen Prozessanlagen, das die Aufgabe hat, den Fluss von Prozessmedien wie Flüssigkeiten, Gasen, Dämpfen innerhalb eines Rohrleitungssystems zu regulieren, zu steuern oder zu sperren. Dies geschieht durch Veränderung der Durchflussöffnung, die durch das Ventil selbst oder durch eine externe Steuerungseinheit angepasst wird.

Die Funktionsweise eines Prozessventils basiert in der Regel auf einem beweglichen Absperrmittel (z.B. einer Klappe, Ventilmembran, Sitzventil, Kugel oder einem Kegel), das seine Position relativ zu dem Ventilkörper verändert und dadurch den Durchflussquerschnitt und somit den Durchfluss des Mediums erhöht, verringert oder vollständig unterbindet. Die Betätigung des Absperrorgans kann manuell über Handräder oder Hebel, oder automatisiert mittels pneumatischer, hydraulischer oder elektrischer Antriebe erfolgen, je nach Anforderung der Anwendung.

Die der Erfindung zugrundeliegenden Probleme werden durch einen Ventilkörper gemäß dem Anspruch 1 sowie durch ein Prozessventil gemäß einem nebengeordneten Anspruch gelöst. Vorteilhafte Ausführungsformen finden sich in den Unteransprüchen und in der nachfolgenden Beschreibung von Ausführungsbeispielen.

Ein Aspekt der Beschreibung betrifft einen Ventilkörper für ein Prozessventil, wobei eine Öffnung des Ventilkörpers zu einem feststehenden Ventilsitz führt, wobei ausgehend von dem feststehenden Ventilsitz des Ventilkörpers wenigstens zwei Fluidkanalabschnitte in den Ventilkörper hinein führen, wobei wenigstens eine Wandung einen der Fluidkanalabschnitte und wenigstens eine Trockenseite des Ventilkörpers voneinander trennt, und wobei wenigstens eine Oberfläche auf der Trockenseite der wenigstens einen Wandung mit wenigstens einem thermoelektrischen Modul thermisch leitend verbunden ist.

Durch das thermoelektrische Modul kann eine kompakte Größe des Ventilkörpers realisiert werden. Dies spielt insbesondere bei kleinen Baugrößen eine Rolle. Der Verzicht auf bewegliche Teile reduziert den Wartungsaufwand des Ventilkörpers, wobei auch der Betrieb und die Montage des Ventilkörpers keine zusätzlich erforderlichen Maßnahmen mit sich bringen. Zudem besitzt das thermoelektrische Modul die Eignung zur präzisen Temperaturregelung in Verbindung mit einer geregelten Versorgungspannung. Im Vergleich zu traditionellen Kühlmethoden wie beispielsweise Wärmetauschern und Pumpen wird die Energieeffizienz verbessert.

Im Vergleich anderen Kühl- / Heizsystemen kommt das thermoelektrische Modul ganz ohne Kühlmittel oder Kühlfluid aus und muss daher vor Inbetriebnahme nicht ruhen. Der Ventilkörper kann in jeder beliebigen Position und Lage verbaut werden, ohne dass Rücksicht auf das thermoelektrische Modul genommen werden muss.

Durch den Peltier-Effekt kann das thermoelektrische Modul als Heizer oder Kühler genutzt werden, indem die Stromrichtung umgekehrt wird.

Im Betrieb wird vorteilhaft ermöglicht, dass die gewünschte Soll-Temperatur des Prozessfluids gehalten werden kann. Es geht also darum, dass das warme Medium nicht ungewollt abgekühlt wird, sodass beispielsweise pastose und hochviskose Medien fließfähig bleiben. Insbesondere wird also die Fließfähigkeit hochviskoser Prozessmedien im Lebensmittel- und Kosmetikbereich durch die Temperierung verbessert.

Vorteilhaft kann auch die Reinigung des Prozessventils verbessert werden. Beispielsweise wird in einem Reinigungszyklus die Prozessanlage auf über 100° C erhitzt. Für Zwecke der Sterilisation wird eine Temperatur von über 100° über eine bestimmte Zeit gehalten. Dafür wird zunächst heißer Dampf durch die Anlage und damit auch das jeweilige Ventil geschickt. Die ersten Ventile und Komponenten werden in Flussrichtung also als erstes erhitzt. Die letzten Ventile in Richtung Ausgang der Anlage werden als letztes auf die Soll-Temperatur für die Sterilisation gebracht. Der Sterilisation wird dadurch unterstützt, dass die letzten Ventile in der Anlage vorgeheizt werden, um den Sterilisationsprozess zu unterstützen und zeitlich zu verkürzen.

Ein sich an die Erhitzung der Anlage anschließender Abkühlungsprozess kann durch die aktive Kühlung durch das wenigstens eine thermoelektrische Modul beispielsweise von Stunden auf 20-30 Minuten oder von 10 Minuten auf 1 Minute reduziert werden. Auch kann ein Kühlen durch das Prozessfluid, was als Ausschuss behandelt wird, entfallen oder reduziert werden. Vorteilhaft wird also der Produkt-Ausschuss verringert und die Reinigungszeit verkürzt.

Ein vorteilhaftes Beispiel zeichnet sich dadurch aus, dass die wenigstens eine Oberfläche auf der Trockenseite der wenigstens einen Wandung wenigstens abschnittsweise einer Ebene folgt.

Vorteilhaft wird durch eine ebene Oberfläche die direkte Kontaktierung mit dem wenigstens einen thermoelektrischen Modul oder einem anderen, thermische Energie leitenden Element vereinfacht. Insbesondere Peltier-Elemente haben ebene Kontaktflächen, womit die ebene Oberfläche die Montage erst ermöglicht und auch vereinfacht.

Ein vorteilhaftes Beispiel zeichnet sich dadurch aus, dass die wenigstens eine Oberfläche der wenigstens einen Wandung auf der der Öffnung des Ventilkörpers, welche zu dem feststehenden Ventilsitz führt, gegenüberliegenden Trockenseite des Ventilkörpers angeordnet ist

Vorteilhaft wird ein Bereich des Ventilkörpers zur Kühlung genutzt, der von der Antriebsseite des Ventilkörpers abgewandt ist. Dadurch entstehen konstruktive Freiheitsgrade bei der Gestaltung der Temperierung des Ventilkörpers.

Ein vorteilhaftes Beispiel zeichnet sich dadurch aus, dass das wenigstens eine thermoelektrische Modul zwischen der wenigstens einen Wandung und wenigstens einem Wärmeaustauschelement angeordnet ist

Vorteilhaft kann mittels des Wärmeaustauschelements Kälte bzw. Wärme effizienter von dem thermoelektrischen Modul abgeführt werden, was die Temperierleistung des thermoelektrischen Moduls verbessert.

Ein vorteilhaftes Beispiel zeichnet sich dadurch aus, dass das wenigstens eine Wärmeaustauschelement eine äußere Wärmeaustauschoberfläche aufweist, und wobei die äußere Wärmeaustauschoberfläche zumindest abschnittsweise Teil eines Gehäuses des Ventilkörpers ist.

Vorteilhaft wird dadurch die Wärmeabfuhr an die Außenluft verbessert. Zudem kann in diesem Beispiel auf Lüftungsöffnungen, welche in einen Innen- oder Trockenraum des Ventilkörpers führen, verzichtet werden. Die Abreinigbarkeit des Ventilkörpers wird erhöht.

Ein vorteilhaftes Beispiel zeichnet sich dadurch aus, dass ein thermischer Isolator zwischen dem wenigstens einen Wärmeaustauschelement und einem Hauptkörper des Ventilkörpers, welcher die wenigstens zwei Fluidkanalabschnitte begrenzt und den feststehenden Ventilsitz bereitstellt, angeordnet ist.

Der thermische Isolator verbessert die Kühl- oder Heizwirkung des thermoelektrischen Moduls. Das liegt darin begründet, dass sich ein beispielsweise aus einer Metalllegierung gefertigter Hauptkörper durch das hindurchfließende Medium schnell aufheizt oder abkühlt. Um eine entsprechende gegenteilige thermische Wirkung zu erzeugen, ermöglicht der Isolator, dass das thermisch isolierte äußere Wärmeaustauschelement einen Transport von thermischer Energie unabhängig von der Temperatur des Hauptkörpers ermöglicht und somit die Kühl- bzw. Heizwirkung verbessert.

Ein vorteilhaftes Beispiel zeichnet sich dadurch aus, dass wenigstens ein Wärmeleitelement zwischen dem wenigstens einen thermoelektrischen Modul und dem Wärmeaustauschelement angeordnet ist.

Vorteilhaft reduziert das wenigstens eine Wärmeleitelement den thermischen Widerstand zwischen dem thermoelektrischen Modul und dem Wärmeaustauschelement, was bedeutet, dass der thermische Energiefluss zwischen dem thermoelektrischen Modul und dem Wärmeaustauschelement verbessert wird.

Ein vorteilhaftes Beispiel zeichnet sich dadurch aus, dass der Ventilkörper wenigstens einen aktiven Lüfter umfasst, welcher dazu eingerichtet ist, im Betrieb einen Luftstrom zu erzeugen, der an dem Wärmeaustauschelement und/oder dem thermoelektrischen Modul vorbeigeleitet wird

Vorteilhaft kann durch den aktiven Lüfter eine verbesserte Abfuhr von thermischer Energie erfolgen.

Ein vorteilhaftes Beispiel zeichnet sich dadurch aus, dass das wenigstens eine Wärmeaustauschelement eine Wärmeaustauschoberfläche aufweist, und wobei die Wärmeaustauschoberfläche innerhalb eines Trockenraums des Ventilkörpers angeordnet ist

Vorteilhaft kann im Wärmeaustauschelement vorhandene thermische Energie mit der Luft im Trockenraum ausgetauscht werden.

Ein vorteilhaftes Beispiel zeichnet sich dadurch aus, dass eine Außenwandung des Ventilkörpers wenigstens eine Belüftungsöffnung aufweist, welche von außen in den Trockenraum des Ventilkörpers führt.

Vorteilhaft kann auf diese Art und Weise Außenlauft in den Trockenraum gelangen und zur Abfuhr von Wärme oder Kälte genutzt werden.

Ein vorteilhaftes Beispiel zeichnet sich dadurch aus, dass der Ventilkörper, insbesondere der Hauptkörper wenigstens einen Temperatursensor umfasst, welcher ein Signal erzeugt, das eine aktuelle Temperatur des Ventilkörpers charakterisiert.

Vorteilhaft kann so die Temperatur des Ventilkörpers gemessen werden, die auch auf das zu stellende Fluid wirkt.

Ein vorteilhaftes Beispiel zeichnet sich dadurch aus, dass eine Ansteuerschaltung vorhanden ist, welche dazu eingerichtet ist, das wenigstens eine thermoelektrische Modul mittels eines Betriebsstroms zu betreiben.

Ein weiteres vorteilhaftes Beispiel zeichnet sich dadurch aus, dass die Ansteuerschaltung in dem Ventilkörper integriert ist.

Ein vorteilhaftes Beispiel zeichnet sich dadurch aus, dass die Ansteuerschaltung dazu eingerichtet ist, den Betriebsstrom in Abhängigkeit von einer vorgegebenen Soll-Temperatur und der aktuellen Temperatur des Ventilkörpers zu ermitteln.

Ein weiterer Aspekt der Beschreibung betrifft ein Prozessventil, das den Ventilkörper gemäß dem vorigen Aspekt, wenigstens ein Absperrorgan, und wenigstens einen Ventilantrieb umfasst, wobei der Ventilantrieb über eine Antriebsstange das Absperrorgan zwischen einer offenen Position, in welcher Prozessfluid durch einen Fluidkanal fließen kann, und einer geschlossenen Position, in welcher der Fluss von Prozessfluid durch den Fluidkanal unterbrochen ist, bewegt.

In der Zeichnung zeigen:
- Fig. 1: einen Ventilkörper in einem schematischen Schnitt;
- Fig. 2: ein Beispiel des Ventilkörpers in einer perspektivischen Darstellung;
- Fig. 3: ein weiteres Beispiel des Ventilkörpers in einem schematischen Schnitt;
- Fig. 4: ein anderes Beispiel des Ventilkörpers in einer Explosionsansicht;
- Fig. 5: das Beispiel des Ventilkörpers aus Figur 4 in einer weiteren Explosionsansicht;
- Fig. 6: ein zusätzliches Beispiel des Ventilkörpers in einer Explosionsansicht; und
- Fig. 7: ein Prozessventil umfassend den Ventilkörper.

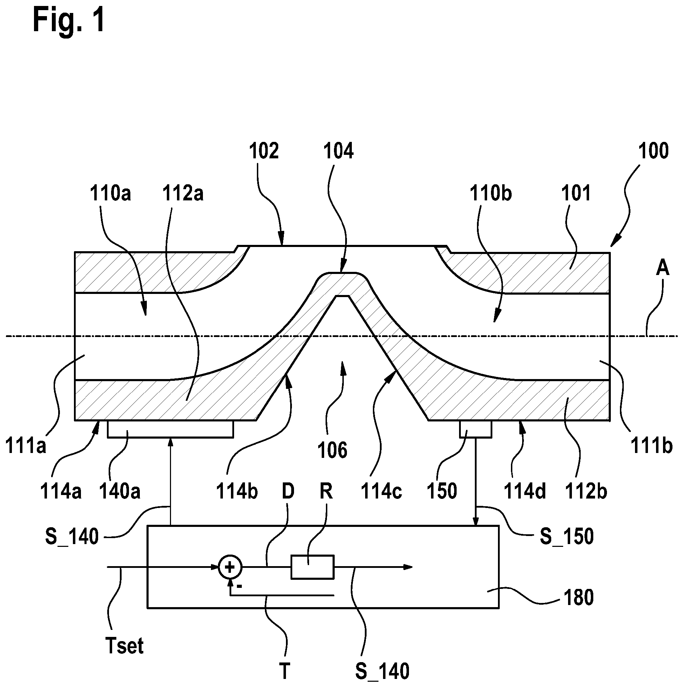

Figur 1 zeigt einen Ventilkörper 100 für ein Prozessventil, insbesondere Membranventil. Es sind im Folgenden Beispiele des Ventilkörpers 100 gezeigt, die für ein Membranventil ausgebildet sind. Selbstverständlich lassen sich die gezeigten Beispiele des Ventilkörpers 100 ohne Weiteres auf andere Ventile, wie beispielsweise Sitzventile, Plug-Diaphragm-Ventile, Kugelventile und andere Ventiltypen übertragen.

Eine Öffnung 102 des Ventilkörpers 100 führt zu einem feststehenden Ventilsitz 104, wobei ausgehend von dem feststehenden Ventilsitz 104 des Ventilkörpers 100 wenigstens zwei Fluidkanalabschnitte 110a-b in den Ventilkörper 100 hinein führen. Im Beispiel führen die Fluidkanalabschnitte 110a-b zu einem jeweiligen Prozessfluidanschluss 111a-b. Wenigstens eine Wandung 112a-b trennt einen der Fluidkanalabschnitte 110a-b und wenigstens eine Trockenseite 106 des Ventilkörpers 100 voneinander, wobei wenigstens eine Oberfläche 114a auf der Trockenseite 106 der wenigstens einen Wandung 112a mit wenigstens einem thermoelektrischen Modul 140a thermisch leitend verbunden ist.

Das thermoelektrische Modul 140a ist beispielsweise als ein Peltier-Element ausgebildet. Das Peltier-Element ist eine Festkörpervorrichtung, welche den thermoelektrischen Effekt nutzt, um eine Temperaturdifferenz über seine Oberflächen zu erzeugen, indem ein elektrischer Strom durch die Festkörpervorrichtung geleitet wird. Dies ermöglicht das Kühlen oder Heizen einer der jeweiligen Oberflächen ohne bewegliche Teile oder Flüssigkeiten.

Das Peltier-Element des thermoelektrischen Moduls 140a umfasst beispielsweise mehrere thermoelektrische Paare, die in Serie geschaltet sind. Jedes thermoelektrische Paar besteht aus zwei unterschiedlichen Halbleitermaterialien n-Typ und p-Typ, die an einem Ende elektrisch in Serie und am anderen Ende thermisch parallel verbunden sind. Diese Paare sind zwischen zwei keramische Platten eingebettet, die für mechanische Stabilität sorgen und als elektrische Isolatoren dienen.

Wenn ein elektrischer Gleichstrom durch das Peltier-Element des thermoelektrischen Moduls 140a fließt, wird Wärme an einem Verbindungsstück der thermoelektrischen Paare absorbiert und am anderen Verbindungsstück abgegeben, was zu einer Kühlung auf der einen Seite des Elements und einer Erwärmung auf der anderen Seite führt. Dieser Prozess ist als Peltier-Effekt bekannt.

Die Temperaturdifferenz, die durch das thermoelektrische Modul 140a erzeugt wird, kann durch Ändern der Stromrichtung und -stärke präzise gesteuert werden.

Beispielsweise ist das thermoelektrische Modul 140a mit einem thermisch leitenden Kleber mit der Oberfläche 114a verbunden.

Ein Sensor 150 erzeugt ein Signal S_150, das eine aktuelle Temperatur T eines Hauptkörpers 101 des Ventilkörpers 100 charakterisiert. Beispielsweise kontaktiert der wenigstens eine Temperatursensor 150 die Oberfläche 114d auf der Trockenseite 106 der Wandung 112b.

Der Hauptkörper 101 ist beispielsweise aus einer Metalllegierung gefertigt.

Eine Ansteuerschaltung 180 ist dazu eingerichtet, das wenigstens eine thermoelektrische Modul 140a mittels eines Betriebsstroms S_140 zu betreiben.

Der Betriebsstrom S_140 ist insbesondere Gleichstrom, wobei die Stromrichtung die Richtung des Transports der thermischen Energie durch das thermoelektrische Modul 140a bestimmt. Eine erste Stromrichtung erzeugt einen Kühlungseffekt des Ventilkörpers 100, es wird dem Ventilkörper 100 also Wärmeenergie entzogen. Eine zweite Stromrichtung erzeugt einen Erwärmungseffekt des Ventilkörpers 100, es wird also Wärmeenergie in den Ventilkörper 100 eingetragen.

Die Ansteuerschaltung 180 ist entweder in dem Ventilkörper 100 integriert, extern ausgeführt oder ein erster Teil der Ansteuerschaltung 180 befindet sich in dem Ventilkörper 100 und ein zweiter Teil der Ansteuerschaltung 180 befindet sich außerhalb des Ventilkörpers 100.

Die Ansteuerschaltung 180 ist dazu eingerichtet, den Betriebsstrom S_140 in Abhängigkeit von einer vorgegebenen Soll-Temperatur Tset und der aktuellen Temperatur T des Ventilkörpers 100 zu ermitteln.

Beispielsweise wird von einer übergeordneten Anlagensteuerung die Soll-Temperatur Tset vorgegeben und mit der aktuellen Temperatur T gemäß dem Signal S_150 verglichen. Es wird eine Differenz D zwischen Soll-Temperatur Tset und Temperatur T gebildet, welche einem Regler R zugeführt wird. Der Regler R ermittelt in Abhängigkeit von der Differenz D den Betriebsstrom S_140.

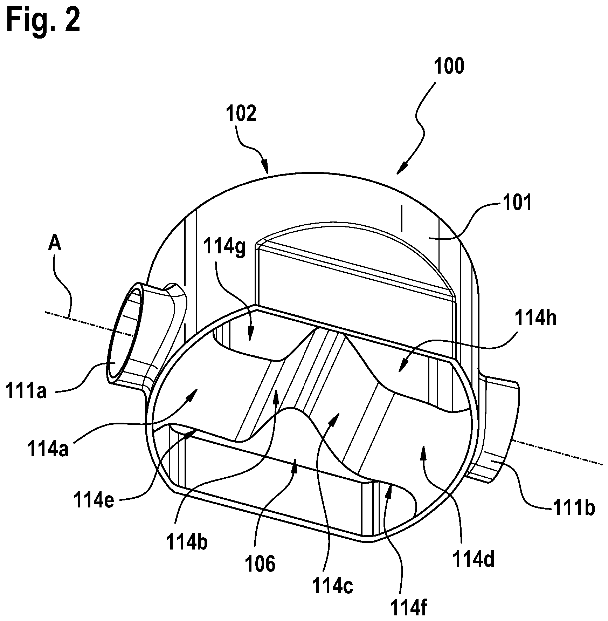

Figur 2 zeigt den Hauptkörper 101 des Ventilkörpers 100 in einer perspektivischen Ansicht, wobei der Blick in einen Trockenraum auf der Trockenseite 106 freigegeben ist. Die wenigstens eine Oberfläche 114a-h auf der Trockenseite 106 der wenigstens einen Wandung 112a-b folgt wenigstens abschnittsweise einer Ebene.

Die wenigstens eine Oberfläche 114a-h der wenigstens einen Wandung 112a-b ist auf der der Öffnung 102 des Ventilkörpers 100, welche zu dem feststehenden Ventilsitz 104 führt, gegenüberliegenden Trockenseite 106 des Ventilkörpers 100 angeordnet.

Wenigstens zwei Oberflächen 114a, 114d oder 114g, 114h der Wandungen 112a-b unterschiedlicher Fluidkanalabschnitte 110a-b verlaufen entlang einer gemeinsamen gedachten Ebene. Vorteilhaft wird damit nicht nur Bauraum gespart, sondern auch die Anbindung an wärmeleitende Komponenten konstruktiv vereinfacht.

Die wenigstens eine Oberfläche 114a, 114d, 114e-h erstreckt sich parallel zu einer Mittenlängsachse A wenigstens eines der Fluidkanalabschnitte 110a-b.

Die wenigstens eine Oberfläche 114b, 114c folgt einer jeweiligen Ebene, durch die eine gedachte Verlängerung der Mittenlängsachse A wenigstens eines der Fluidkanalabschnitte 110a-b verläuft. Beide Oberflächen 114b-c verjüngen den Trockenraum in Richtung Ventilsitz 104.

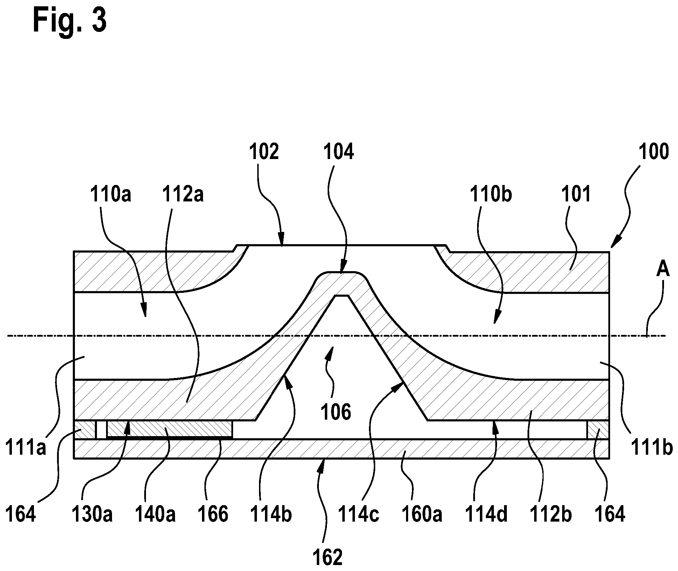

Die Figuren 3, 4, 5 zeigen weitere Beispiele des Ventilkörpers 100. Das wenigstens eine thermoelektrische Modul 140a, 140d ist zwischen der wenigstens einen Wandung 112a-b und wenigstens einem Wärmeaustauschelement 160a angeordnet.

Das wenigstens eine Wärmeaustauschelement 160a umfasst eine äußere Wärmeaustauschoberfläche 162, wobei die äußere Wärmeaustauschoberfläche 162 zumindest abschnittsweise Teil eines Gehäuses des Ventilkörpers 100 ist.

Wenigstens ein Wärmeleitelement 166 ist zwischen dem wenigstens einen thermoelektrischen Modul 140a-h und dem Wärmeaustauschelement 160a-h angeordnet und ermöglicht die Leitung von thermischer Energie zwischen thermoelektrischem Modul 140a, 140d und dem Wärmeaustauschelement 160a-h.

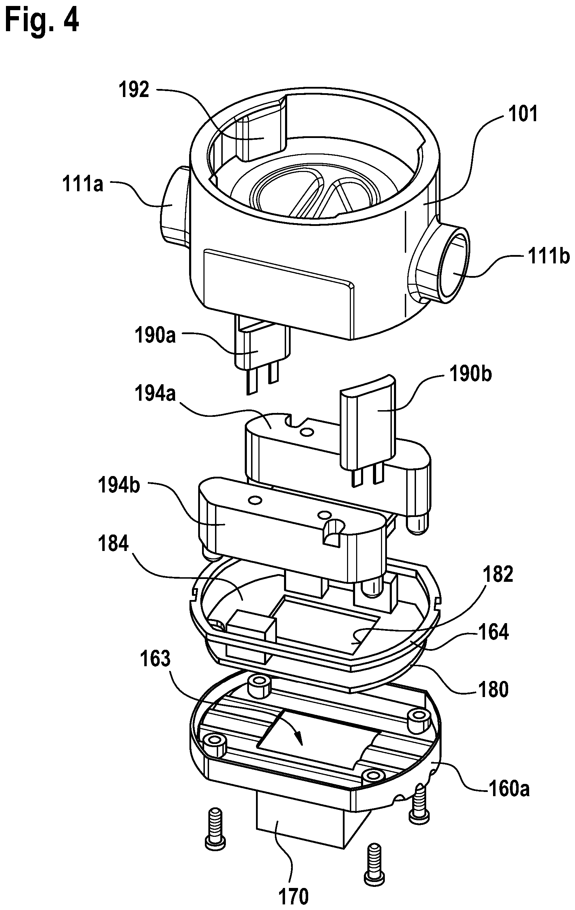

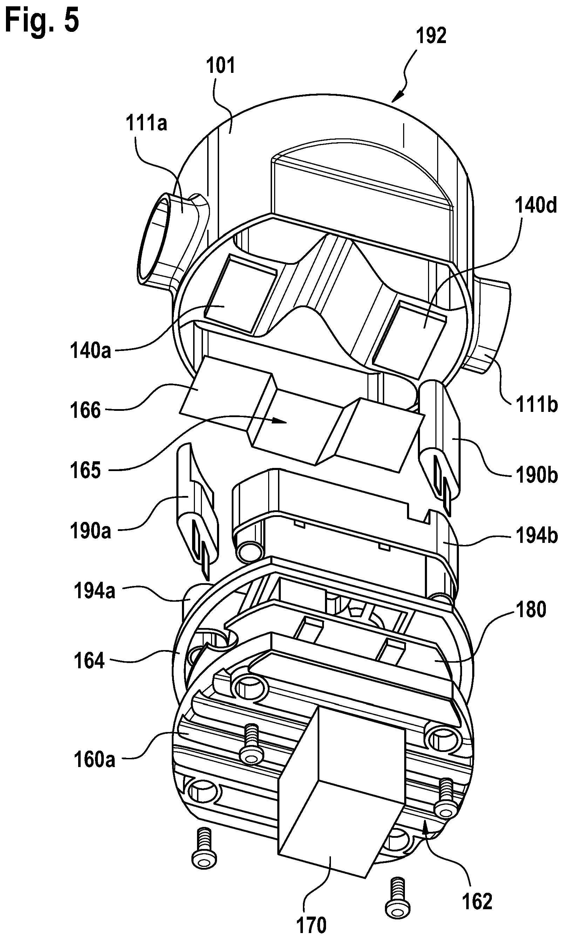

Beispielsweise ist das thermoelektrische Modul 140a mittels des Wärmeleitelements 166, wie beispielsweise einer Wärmeleitpaste in Figur 3 oder einem metallischen Wärmeleitblech in Figuren 4 und 5, an das Wärmeaustauschelement 160a thermisch angebunden.

Ein thermischer Isolator 164 ist zwischen dem wenigstens einen Wärmeaustauschelement 160a und dem Hauptkörper 101 des Ventilkörpers 100, welcher die wenigstens zwei Fluidkanalabschnitte 110a-b begrenzt und den feststehenden Ventilsitz 104 bereitstellt, angeordnet.

Der thermische Isolator 164 umfasst als Material wenigstens einen Kunststoff und/oder wenigstens ein Elastomer.

Der thermische Isolator 164 ist in allen beschriebenen Beispielen beispielsweise teilweise lichttransparent ausgebildet. Die Ansteuerschaltung 180 ist mit im Trockenraum angeordneten Lichtquellen verbunden, die den thermischen Isolator 164 mit Licht beleuchten.

In einem Beispiel werden die Lichtquellen derart von der Ansteuerschaltung 180 betrieben, dass diese bei einem Aufheizen des Hauptkörpers 101 rotes Licht abstrahlen. Damit ist von außen das Aufheizen erkennbar.

In einem weiteren Beispiel werden die Lichtquellen derart von der Ansteuerschaltung 180 betrieben, dass diese bei einem Abkühlen des Hauptkörpers 101 blaues Licht abstrahlen. Damit ist von außen das Abkühlen erkennbar.

Gemäß dem Beispiel der Figuren 4 und 5 ist das Wärmeleitblech im Sinne des Wärmeleitelements 166 gestuft ausgeführt und verbindet die beiden thermoelektrischen Module 140a und 140d mit einer Innenfläche 163 des Wärmeaustauschelements 160a. Hierzu umfasst eine Leiterplatte 184 der Ansteuerschaltung 180 eine Durchgangsöffnung 182. Durch die Durchgangsöffnung 182 hindurch führt das Wärmeleitelement 166, um eine thermische Kopplung zwischen den thermoelektrischen Modulen 140a und 140d und dem als Abschlussdeckel fungierenden Wärmeaustauschelement 160a bereitzustellen. Die Innenfläche 163 ist mit einer Kontaktfläche 165 des Wärmeleitelements 166 thermisch leitend verbunden.

In einem nicht gezeigten Beispiel entfällt die Leiterplatte 184. Alternativ wird der Bereich der Leiterplatte 184, der direkt, also auf direktem Weg, zwischen dem thermoelektrischen Modul 140a, 140d und dem Wärmeaustauschelement 160a liegt von der Leiterplatte 184 ausgenommen. Damit befindet sich ein anders ausgestaltetes Wärmeleitelement zwischen dem jeweiligen thermoelektrischen Modul 140a, 140d und dem Wärmeaustauschelement 160a.

Wenigstens ein elektrisches Kontaktelement 190a-b ist im montierten Zustand des Ventilkörpers 100 mit der Ansteuerschaltung 180 elektrisch verbunden und stellt im Bereich der Antriebsschnittstelle 192 elektrische Kontakte bereit, um über Gegenkontakte die Ansteuerschaltung ausgehend von der Antriebsseite mit elektrischer Energie und Daten zu versorgen. Vorteilhaft liegen damit im montierten Zustand des Prozessventils im Bereich des Ventilkörpers 100 keine Steckverbinder frei.

Wenigstens ein trockenraumseitiges Befestigungselement 194a-b ist zwischen dem Hauptkörper 101 und dem Wärmeaustauschelements 160a angeordnet. Das wenigstens eine Befestigungselement 194a-b legt das zugeordnete wenigstens eine elektrische Kontaktelement 190a-b zum Hauptkörper 101 fest.

Der Ventilkörper 100 umfasst wenigstens einen aktiven Lüfter 170, welcher dazu eingerichtet ist, im Betrieb einen Luftstrom zu erzeugen, der an dem Wärmeaustauschelement 160a-h vorbeigeleitet wird.

Selbstverständlich kann der aktive Lüfter 170 auch entfallen und eine passive Kühlung realisiert werden.

Der aktive Lüfter 170 umfasst beispielsweise ein durch einen Elektromotor angetriebenes axial oder radial durchströmtes Laufrad, welches in einem eigenen Gehäuse rotierend angeordnet ist.

Der Ventilkörper 100 der Figuren 3-5 ist nach außen hermetisch abgeschlossen.

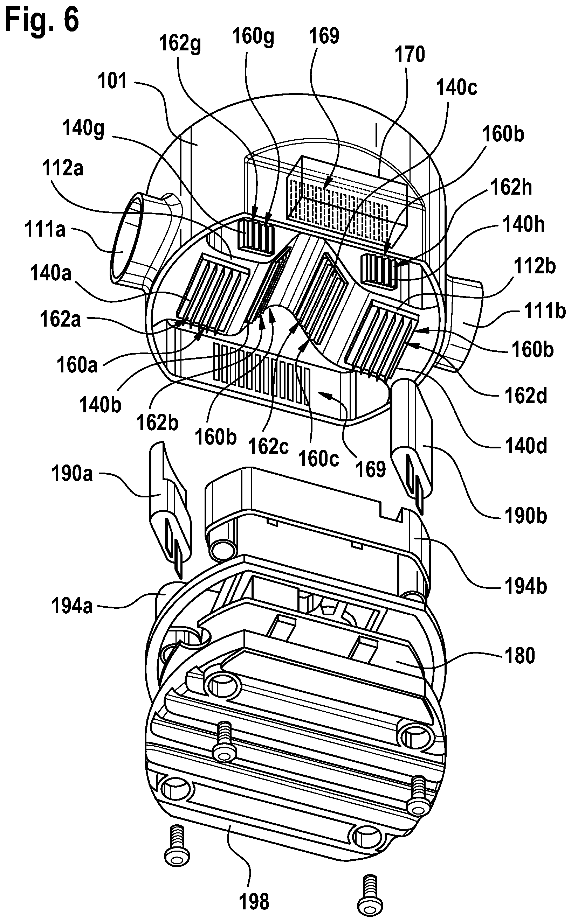

Figur 6 zeigt ein weiteres Beispiel des Ventilkörpers 100. Im Unterschied zum Ventilkörper 100 der Figuren 3-5 ist der Ventilkörper 100 der Figur 6 nicht hermetisch nach außen abgeschottet, sondern seine Außenwandung umfasst wenigstens eine Belüftungsöffnung 169, welche von außen in den Trockenraum des Ventilkörpers 100 führt.

Im vorliegenden Beispiel sind mehrere Belüftungsöffnungen 169 im Sinne eines Belüftungsgitters zu beiden Seiten des Hauptkörpers 101 in die Außenwandung eingebracht.

Ein Deckel 198 schließt den Ventilkörper 100 auf der vom Antrieb abgewandten Seite ab.

Der aktive Lüfter 170 ist im vorliegenden Beispiel außerhalb des Hauptkörpers 101 auf das Belüftungsgitter aufgesetzt. Selbstverständlich kann der aktive Lüfter auf innerhalb des Trockenraums angeordnet sein.

Das wenigstens eine thermoelektrische Modul 140a-h ist zwischen der wenigstens einen Wandung 112a-b und dem wenigstens einen Wärmeaustauschelement 160a-h angeordnet.

Das wenigstens eine Wärmeaustauschelement 160a-h umfasst Wärmeaustauschoberflächen 162a-h , welche vorliegend durch Kühlrippen gebildet wird bzw. werden. Die Kühlrippen sind beispielsweise auf dem jeweiligen thermoelektrischen Modul 140a-h aufgeklebt.

Das wenigstens eine Wärmeaustauschelement 160a-h weist auf der der zugeordneten Wandung 112a-b abgewandten Seite eine größere wärmewirksame Gesamtfläche auf als auf der der zugeordneten Wandung 112a-b zugewandten Seite.

Die thermoelektrischen Module 140e und 140f und die zugeordneten Wärmeaustauschelemente sind in der Figur 6 aufgrund der gezeigten Perspektive nicht sichtbar.

Der thermischer Isolator 164 ist in Figur 6 zwischen dem wenigstens einen Deckel 198 und dem Hauptkörper 101 des Ventilkörpers 100, welcher die wenigstens zwei Fluidkanalabschnitte 110a-b begrenzt und den feststehenden Ventilsitz 104 bereitstellt, angeordnet.

Das wenigstens eine thermoelektrische Modul 140a-h ist zwischen der wenigstens einen Wandung 112a-b und wenigstens einem Wärmeaustauschelement angeordnet.

Das wenigstens eine Wärmeaustauschelement 160a-h weist durch eine Kühlrippenstruktur eine äußere Wärmeaustauschoberfläche 162a-h auf, wobei die äußere Wärmeaustauschoberfläche 162a-h durch Luftkonvektion zum Transport von thermischer Energie genutzt wird.

Das wenigstens eine Wärmeaustauschelement 160a-h umfasst also eine von dem wenigstens einen thermoelektrischen Modul 140a-h abgewandte Wärmeaustauschoberfläche 162a-h, wobei die Wärmeaustauschoberfläche 162a-h innerhalb eines Trockenraums des Ventilkörpers 100 angeordnet ist.

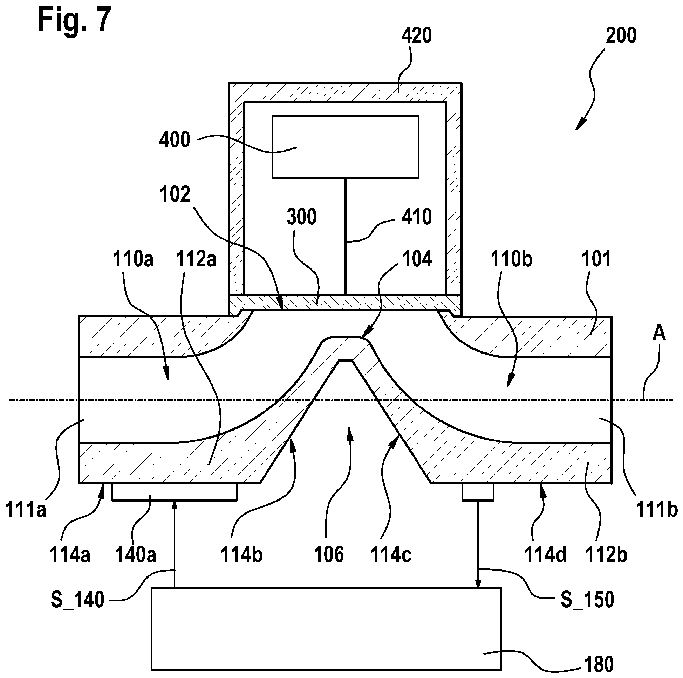

Das in Figur 7 gezeigte Membranventil 200, das allgemein als Prozessventil bezeichnet wird, umfasst den Ventilkörper 100. Die wenigstens eine Ventilmembran 300 ist auch als Absperrorgan bezeichenbar. Im gezeigten Beispiel verschließt die Ventilmembran 300 die Öffnung 102, welche zu dem feststehenden Ventilsitz 104 führt, und begrenzt damit einen Fluidkanal umfassend die wenigstens zwei Fluidkanalabschnitte 110a-b begrenzt. In einem anderen Beispiel ist das Absperrorgan nicht zwischen dem Rand der Öffnung 102 verspannt, sondern innerhalb des Prozessventils bewegbar angeordnet, um auf den Ventilsitz gedrückt zu werden.

Wenigstens ein Ventilantrieb 400 bewegt über eine Antriebsstange 410 das Absperrorgan, vorliegend die Ventilmembran 300, zwischen einer offenen Position, in welcher Prozessfluid durch den Fluidkanal fließen kann, und einer geschlossenen Position, in welcher der Fluss von Prozessfluid durch den Fluidkanal unterbrochen ist.

Der Ventilantrieb 400 umfasst ein Gehäuse 420, das sich an dem Ventilkörper 100 abstützt und die Ventilmembran zwischen dem Gehäuse 420 und dem Bereich des Ventilkörpers 100, der die Öffnung 102 umgibt, verspannt.

## Patentansprüche

1. Ein Ventilkörper (100) für ein Prozessventil, insbesondere für ein Membranventil, wobei eine Öffnung (102) des Ventilkörpers (100) zu einem feststehenden Ventilsitz (104) führt, wobei ausgehend von dem feststehenden Ventilsitz (104) des Ventilkörpers (100) wenigstens zwei Fluidkanalabschnitte (110a-b) in den Ventilkörper (100) hinein führen, wobei wenigstens eine Wandung (112a-b) einen der Fluidkanalabschnitte (110a-b) und wenigstens eine Trockenseite (106) des Ventilkörpers (100) voneinander trennt, und wobei wenigstens eine Oberfläche (114a-h) auf der Trockenseite (106) der wenigstens einen Wandung (112a-b) mit wenigstens einem als ein Peltier-Element ausgebildeten thermoelektrischen Modul (140a-h) thermisch leitend verbunden ist.

2. Der Ventilkörper (100) gemäß dem Anspruch 1, wobei die wenigstens eine Oberfläche (114a-h) auf der Trockenseite (106) der wenigstens einen Wandung (112a-b) wenigstens abschnittsweise einer Ebene folgt.

3. Der Ventilkörper (100) gemäß dem Anspruch 1 oder 2, wobei die wenigstens eine Oberfläche (114a-h) der wenigstens einen Wandung (112a-b) auf der der Öffnung (102) des Ventilkörpers (100), welche zu dem feststehenden Ventilsitz (104) führt, gegenüberliegenden Trockenseite (106) des Ventilkörpers (100) angeordnet ist.

4. Der Ventilkörper (100) gemäß einem der vorigen Ansprüche, wobei das wenigstens eine thermoelektrische Modul (140a-h) zwischen der wenigstens einen Wandung (112a-b) und wenigstens einem Wärmeaustauschelement (160a-h) angeordnet ist.

5. Der Ventilkörper (100) gemäß dem Anspruch 4, wobei das wenigstens eine Wärmeaustauschelement (160a) eine äußere Wärmeaustauschoberfläche (162) aufweist, und wobei die äußere Wärmeaustauschoberfläche (162) zumindest abschnittsweise Teil eines Gehäuses des Ventilkörpers (100) ist.

6. Der Ventilkörper (100) gemäß dem vorigen Anspruch, wobei ein thermischer Isolator (164) zwischen dem wenigstens einen Wärmeaustauschelement (160a) und einem Hauptkörper (101) des Ventilkörpers (100), welcher die wenigstens zwei Fluidkanalabschnitte (110a-b) begrenzt und den feststehenden Ventilsitz (104) bereitstellt, angeordnet ist.

7. Der Ventilkörper (100) gemäß einem der vorigen Ansprüche 3 bis 6, wobei wenigstens ein Wärmeleitelement (166) zwischen dem wenigstens einen thermoelektrischen Modul (140a-h) und dem Wärmeaustauschelement (160a-h) angeordnet ist.

8. Der Ventilkörper (100) gemäß einem der Ansprüche 4 bis 7, wobei der Ventilkörper (100) wenigstens einen aktiven Lüfter (170) umfasst, welcher dazu eingerichtet ist, im Betrieb einen Luftstrom zu erzeugen, der an dem Wärmeaustauschelement (160a-h) und/oder dem thermoelektrischen Modul (140a-h) vorbeigeleitet wird.

9. Der Ventilkörper (100) gemäß einem der vorigen Ansprüche 2 bis 8, wobei das wenigstens eine Wärmeaustauschelement (166a-h) eine Wärmeaustauschoberfläche (162a-h) aufweist, und wobei die Wärmeaustauschoberfläche (162a-h) innerhalb eines Trockenraums des Ventilkörpers (100) angeordnet ist.

10. Der Ventilkörper (100) gemäß einem der vorigen Ansprüche, wobei eine Außenwandung des Ventilkörpers (100) wenigstens eine Belüftungsöffnung (169) aufweist, welche von außen in den Trockenraum des Ventilkörpers (100) führt.

11. Der Ventilkörper (100) gemäß einem der vorigen Ansprüche umfassend wenigstens einen Temperatursensor (150), welcher ein Signal (S_150) erzeugt, das eine aktuelle Temperatur (T) des Ventilkörpers (100) charakterisiert.

12. Der Ventilkörper (100) gemäß einem der vorigen Ansprüche und eine Ansteuerschaltung (180), welche dazu eingerichtet ist, das wenigstens eine thermoelektrische Modul (140a-h) mittels eines Betriebsstroms (S_140) zu betreiben.

13. Der Ventilkörper (100) und die Ansteuerschaltung (180) gemäß dem Anspruch 12, welche in dem Ventilkörper (100) integriert ist.

14. Der Ventilkörper (100) und die Ansteuerschaltung (180) gemäß Anspruch 10 und einem der Ansprüche 12 oder 13, wobei die Ansteuerschaltung (180) dazu eingerichtet ist, den Betriebsstrom (S_140) in Abhängigkeit von einer vorgegebenen Soll-Temperatur (Tset) und der aktuellen Temperatur (T) des Ventilkörpers (100) zu ermitteln.

15. Ein Prozessventil, insbesondere ein Membranventil, umfassend:
den Ventilkörper (100) gemäß einem der vorigen Ansprüche;
wenigstens ein Absperrorgan, insbesondere eine Ventilmembran (400); und
wenigstens einen Ventilantrieb (400), welcher über eine Antriebsstange (410) das Absperrorgan, insbesondere die Ventilmembran (400) zwischen einer offenen Position, in welcher Prozessfluid durch einen Fluidkanal fließen kann, und einer geschlossenen Position, in welcher der Fluss von Prozessfluid durch den Fluidkanal unterbrochen ist, bewegt.
